# EUROPEAN PATENT SPECIFICATION

(11) **EP 4 210 852 B1**
(45) Date of publication and mention of the grant of the patent: **01.07.2026**
(21) Application number: 21791524.8
(22) Date of filing: 10.09.2021
(51) Int. Cl.: B01D 15/22, B01D 15/38, B01D 63/08, B01D 63/10, B01D 69/02, B01D 71/26, B01J 20/28, B01J 20/286, G01N 30/60

(54) **AFFINITY CHROMATOGRAPHY DEVICES CONTAINING A HEAT TREATED FIBRILLATED POLYMER MEMBRANE AND MANIFOLDS CONTAINING THE SAME**
AFFINITÄTSCHROMATOGRAPHIEVORRICHTUNGEN MIT WÄRMEBEHANDELTER FIBRILLIERTER POLYMERMEMBRAN UND VERTEILER DAMIT
DISPOSITIFS DE CHROMATOGRAPHIE D'AFFINITÉ CONTENANT UNE MEMBRANE POLYMÈRE FIBRILLÉE TRAITÉE THERMIQUEMENT ET COLLECTEURS LES CONTENANT

(30) Priority: 11.09.2020 US 202063077523 P; 11.03.2021 US 202163159621 P
(43) Date of publication of application: 19.07.2023
(73) Proprietor: W. L. Gore & Associates, Inc., Newark, DE 19711 (US)
(72) Inventor: CLINGER, Jared M., Newark, Delaware 19711 (US); KIM, EuiJun, Newark, Delaware 19711 (US); MABE, Kevin J., Newark, Delaware 19711 (US); MCMANAWAY, Michael C., Newark, Delaware 19711 (US); VAN VOORHEES, Eric, Newark, Delaware 19711 (US)
(74) Representative: HGF
(86) International application number: PCT/US2021/049970
(87) International publication number: WO 2022/056332

(56) References cited:
- EP-A1- 3 556 801
- WO-A1-2011/152788
- WO-A1-2017/014817
- WO-A1-2017/176522
- WO-A1-96/28501
- US-A- 4 187 390

## Description

### FIELD

The present disclosure relates generally to affinity chromatography, and more specifically, to an affinity chromatography device that includes a fibrillated heat treated polymer membrane containing therein spherical particles, a particle size distribution that has a D90/D10 less than or equal to 3, and which enables the separation of a targeted molecule from an aqueous mixture. Manifolds containing multiple affinity chromatography devices and manifolds in a parallel configuration are also disclosed.

### BACKGROUND

Chromatographic methods generally are used to separate and/or purify molecules of interest such as proteins, nucleic acids, and polysaccharides from a mixture. Affinity chromatography specifically involves passing the mixture over a matrix having a ligand specific (i.e. a specific binding partner) for the molecule of interest bound to it. Upon contacting the ligand, the molecule of interest is bound to the matrix and is therefore retained from the mixture. Affinity chromatography provides certain advantages over other types of chromatography. For example, affinity chromatography provides a purification method that can isolate a target protein from a mixture of the target protein and other biomolecules in a single step in high yield. International patent application no. WO 2017/176522 to W. L. Gore & Associates, Inc. describes an affinity chromatography device containing a stacked membrane that contains inorganic particles and at least one impermeable layer. International patent application no. WO 2017/014817 to W. L. Gore & Associates, Inc. describes an affinity chromatography device that contains a stacked membrane assembly or a wound membrane assembly.

Despite the advantages of current affinity chromatography devices, there exists a need in the art for a chromatography device that can be used at shorter residence times than conventional devices while providing the same binding capacity or better binding capacities than current offerings and that is re-useable.

### SUMMARY

The scope of the claimed invention is defined by the appended claims. In one Aspect ("Aspect 1"), an affinity chromatography device includes a fluid inlet, a fluid outlet connected to the fluid inlet, a fibrillated heat treated polymer membrane positioned between the fluid inlet and fluid outlet and containing therein inorganic particles having a spherical shape and a nominal particle size selected from about 5 microns, about 10 microns, about 15 microns, about 20 microns, and combinations thereof, a housing encompassing the fluid inlet, the fluid outlet and the fibrillated heat treated polymer membrane, where a particle size distribution has a D90/D10 less than or equal to 3, and where at least one of the fibrillated heat treated polymer membrane and the inorganic particles has covalently bonded thereto an affinity ligand that reversibly binds to a targeted molecule, where the targeted molecule is a protein, antibody, viral vector, and combinations thereof, wherein the affinity chromatography device has a hydraulic permeability from about 200 (X 10⁻¹² cm²) to about 700 (X 10⁻¹² cm²), and has a dynamic binding capacity (DBC) of at least 35 mg/ml at 10% breakthrough at a residence time of 20 seconds, and wherein said fibrillated heat polymer membrane is obtained by subjecting the fibrillated polymer containing the inorganic particles therein to a temperature above the melting point of the fibrillated polymer membrane for a designated period of time.

According to another Aspect ("Aspect 2") further to Aspect 1, the inorganic particles having a spherical shape are selected from silica, zeolites, hydroxyapatite, metal oxides and combinations thereof.

According to another Aspect ("Aspect 3") further to any one of Aspects 1 to 2, where the fibrillated polymer membrane comprises an expanded polytetrafluoroethylene membrane, an expanded modified polytetrafluoroethylene membrane, an expanded tetrafluoroethylene copolymer membrane, or an expanded polyethylene membrane.

According to another Aspect ("Aspect 4") further to any one of Aspects 1 to 3, where the fibrillated heat treated polymer membrane is an expanded polytetrafluoroethylene membrane.

According to another Aspect ("Aspect 5") further to any one of Aspects 1 to 4, where the affinity ligand is selected from Protein A, Protein G, Protein L, human Fc receptor protein, antibodies, polysaccharides and combinations thereof.

According to another Aspect ("Aspect 6") further to any one of Aspects 1 to 5, where the inorganic particles comprise at least a first inorganic particle having a spherical shape and a first nominal particle size and a second inorganic particle having a spherical shape and a second nominal particle size, the first and second nominal particle sizes being different from each other.

According to another Aspect ("Aspect 7") further to any one of Aspects 1 to 6 where the inorganic particles having a spherical shape comprise a blend of 10 micron spherical particles and 20 micron spherical particles, and where the blend is from 10:90 to 90:10.

According to another Aspect ("Aspect 8") further to any one of Aspects 1 to 7, where the inorganic particles having a spherical shape comprise a blend of 5 micron spherical particles and 10 micron spherical particles, and where the blend is from 10:90 to 90:10.

According to another Aspect ("Aspect 9") further to any one of Aspects 1 to 6, where the inorganic particles having a spherical shape comprise a blend of 5 micron spherical particles and 20 micron spherical particles, and where the blend is from 10:90 to 90:10.

According to another Aspect ("Aspect 10") further to any one of Aspects 1 to 9, including a cycling durability of at least 100 cycles at an operating pressure less than 0.3 MPa.

According to another Aspect ("Aspect 11") further to any one of Aspects 1 to 10, where the fibrillated heat treated polymer membrane has a wound configuration.

According to another Aspect ("Aspect 12") further to any one of Aspects 1 to 11, where the fibrillated polymer membrane has a stacked configuration.

According to another Aspect ("Aspect 13") further to any one of Aspects 1 to 12, where the fibrillated polymer membrane has a wound configuration, a stacked configuration, and a combination thereof.

According to another Aspect ("Aspect 14") further to any one of Aspects 1 to 13, where an inner intermediate material is circumferentially positioned on an outer surface of a core and where the fibrillated polymer membrane is circumferentially positioned on the inner intermediate material.

According to another Aspect ("Aspect 15") further to any one of Aspects 1 to 14, including an outer intermediate material circumferentially positioned on the heat treated fibrillated polymer membrane.

According to another Aspect ("Aspect 16") further to any one of Aspects 1 to 15, where the inner intermediate material and outer intermediate material are selected from a porous fluoropolymer film, a porous non-fluoropolymer film, a porous non-woven material and a porous woven material.

According to another Aspect ("Aspect 17") further to any one of Aspects 1 to 16, where at least one of the inner intermediate material and outer intermediate material is a polypropylene non-woven material.

In one Aspect ("Aspect 18") a device includes a first manifold and a second manifold in a parallel configuration and where each of the first manifold and the second manifold includes a plurality of the affinity chromatography device of any one of Aspects 1 to 17.

In another Aspect ("Aspect 19") further to Aspect 18, where the first manifold and the second manifold are enclosed within a housing.

According to one Aspect not of the claimed invention ("Aspect 20"), an article includes a centrally located core, a fibrillated heat treated polymer membrane containing therein spherical inorganic particles having a spherical shape and a nominal particle size from about 5 microns to about 20 microns wound around the core, a housing surrounding both the core and the fibrillated heat treated polymer membrane, a first end cap positioned at a first end of the housing, and a second end cap positioned at a second end of the housing, a particle size distribution has a D90/D10 less than 3, and where at least one of the fibrillated heat treated polymer membrane and the spherical inorganic particles has covalently bonded thereto an affinity ligand that reversibly binds to a targeted molecule.

According to another Aspect not of the claimed invention ("Aspect 21") further to Aspect 20, where the targeted molecule is a protein, antibody, viral vector, and combinations thereof.

According to another Aspect not of the claimed invention ("Aspect 22") further to Aspect 20 or Aspect 21, including a hydraulic permeability from about 200 (X 10¹² cm²) to about 700 (X 10¹² cm²).

According to another Aspect not of the claimed invention ("Aspect 23") further to any one of Aspects 20 to 22, where the inorganic particles having a spherical shape are selected from silica, zeolites, hydroxyapatite, metal oxides and combinations thereof.

According to another Aspect not of the claimed invention ("Aspect 24") further to any one of Aspects 20 to 23, where the fibrillated polymer membrane includes at least one of an expanded polytetrafluoroethylene membrane, an expanded modified polytetrafluoroethylene membrane, an expanded tetrafluoroethylene copolymer membrane, or an expanded polyethylene membrane.

According to another Aspect not of the claimed invention ("Aspect 25") further to any one of Aspects 20 to 24, where the fibrillated heat treated polymer membrane is a fibrillated heat treated expanded polytetrafluoroethylene membrane.

According to another Aspect not of the claimed invention ("Aspect 26") further to any one of Aspects 20 to 25, where the affinity ligand is selected from Protein A, Protein G, Protein L, human Fc receptor protein, antibodies, polysaccharides and combinations thereof.

According to another Aspect not of the claimed invention ("Aspect 27") further to any one of Aspects 20 to 26, where the inorganic particles comprise at least a first inorganic particle having a spherical shape and a first nominal particle size and a second inorganic particle having a spherical shape and a second nominal particle size, and where the first and second nominal particle sizes are different from each other.

According to another Aspect not of the claimed invention ("Aspect 28") further to any one of Aspects 20 to 27, where the nominal particle size is selected from about 5 microns, about 10 microns, about 15 microns, about 20 microns, and combinations thereof.

According to another Aspect not of the claimed invention ("Aspect 29") further to any one of Aspects 20 to 28, the inorganic particles having a spherical shape comprise a blend of 10 micron spherical particles and 20 micron spherical particles, and where the blend is from 10:90 to 90:10.

According to another Aspect not of the claimed invention ("Aspect 30") further to any one of Aspects 20 to 28, where the inorganic particles having a spherical shape comprise a blend of 5 micron spherical particles and 10 micron spherical particles, and where the blend is from 10:90 to 90:10.

According to another Aspect not of the claimed invention ("Aspect 31") further to any one of Aspects 20 to 28, where the inorganic particles having a spherical shape comprise a blend of 5 micron spherical particles and 20 micron spherical particles, and where the blend is from 10:90 to 90:10.

According to another Aspect not of the claimed invention ("Aspect 32") further to any one of Aspects 20 to 31, including a dynamic binding capacity (DBC) of at least 35 mg/ml at a residence time of 20 seconds.

According to another Aspect not of the claimed invention ("Aspect 33") further to any one of Aspects 20 to 32, including a cycling durability of at least 100 cycles and an operating pressure less than 0.3 MPa.

According to another Aspect not of the claimed invention ("Aspect 34") further to any one of Aspects 20 to 33, where an inner intermediate material is circumferentially positioned on an outer surface of a core and the fibrillated heat treated polymer membrane is circumferentially positioned on the inner intermediate material.

According to another Aspect not of the claimed invention ("Aspect 35") further to any one of Aspects 20 to 34, including an outer intermediate material circumferentially positioned on the fibrillated heat treated polymer membrane

According to another Aspect not of the claimed invention ("Aspect 36") further to any one of Aspects 20 to 35, where the inner intermediate material and the outer intermediate material are selected from a porous fluoropolymer film, a porous non-fluoropolymer film, a porous non-woven material and a porous woven material.

According to another Aspect not of the claimed invention ("Aspect 37") further to any one of Aspect 20 to 36, where at least one of the inner intermediate material and the outer intermediate material is a polypropylene non-woven material.

In one Aspect not of the claimed invention ("Aspect 38") a manifold includes at least two of the affinity chromatography devices of any one of Aspects 20 to 37 arranged in a parallel configuration.

According to another Aspect not of the claimed invention ("Aspect 39") further to Aspect 38, where the manifold is enclosed within a housing.

In one Aspect not of the claimed invention ("Aspect 40") a device includes a first manifold and a second manifold in a parallel configuration where each of the first manifold and the second manifold includes at least two of the affinity chromatography device of any one of Aspects 20 to 37.

According to another Aspect not of the claimed invention ("Aspect 41") further to Aspect 40, the first manifold and the second manifold are enclosed within a housing.

According to another Aspect not of the claimed invention ("Aspect 42") where the article of any one of Aspects 20 to 37 are used to separate the targeted molecule from a fluid stream.

According to one Aspect not of the claimed invention ("Aspect 43"), an affinity chromatography device includes a housing, an inlet to permit fluid flow into the housing, first and second flow distributors, said first flow distributor and said second flow distributor positioned at opposing ends of said housing, an outlet to permit fluid flow out of said housing, a stacked membrane assembly disposed within said housing between the fluid inlet and fluid outlet, said stacked membrane assembly, where the stacked membrane assembly includes two or more fibrillated heat treated polymer membranes in a stacked configuration, where the fibrillated heat treated polymer membrane contains therein inorganic particles having a spherical shape and a nominal particle size from about 5 microns to about 20 microns, where a particle size distribution has a D90/D10 less than 3, and where at least one of the fibrillated heat treated polymer membrane and the spherical inorganic particles has covalently bonded thereto an affinity ligand that reversibly binds to a targeted molecule.

According to another Aspect not of the claimed invention ("Aspect 44") further to Aspect 43, where the targeted molecule is a protein, antibody, viral vector, and combinations thereof.

According to another Aspect not of the claimed invention ("Aspect 45") further to Aspect 43 or Aspect 44, including first and second flow distributors, said first flow distributor and said second flow distributor positioned at opposing ends of the housing.

According to another Aspect not of the claimed invention ("Aspect 46") further to any one of Aspects 43 to 45 including a hydraulic permeability from about 200 (X 10⁻¹² cm²) to about 700 (X 10⁻¹² cm²).

According to another Aspect not of the claimed invention ("Aspect 47") further to any one of Aspects 43 to 46, where the inorganic particles having a spherical shape are selected from silica, zeolites, hydroxyapatite, metal oxides and combinations thereof.

According to another Aspect not of the claimed invention ("Aspect 48") further to any one of Aspects 43 to 47, where the fibrillated polymer membrane includes an expanded polytetrafluoroethylene membrane, an expanded modified polytetrafluoroethylene membrane, an expanded tetrafluoroethylene copolymer membrane, or an expanded polyethylene membrane.

According to another Aspect not of the claimed invention ("Aspect 49") further to any one of Aspects 43 to 48, where the fibrillated heat treated polymer membrane is a fibrillated heat treated expanded polytetrafluoroethylene membrane.

According to another Aspect not of the claimed invention ("Aspect 50") further to any one of Aspects 43 to 49, the affinity ligand is selected from Protein A, Protein G, Protein L, human Fc receptor protein, antibodies, polysaccharides and combinations thereof.

According to another Aspect not of the claimed invention ("Aspect 51") further to any one of Aspects 43 to 50, where the inorganic particles comprise at least a first inorganic particle having a spherical shape and a first nominal particle size and a second inorganic particle having a spherical shape and a second nominal particle size, where the first and second nominal particle sizes are different from each other.

According to another Aspect not of the claimed invention ("Aspect 52") further to any one of Aspects 43 to 51, where the nominal particle size is selected from about 5 microns, about 10 microns, about 15 microns, about 20 microns, and combinations thereof.

According to another Aspect not of the claimed invention ("Aspect 53") further to any one of Aspects 43 to 52, where the inorganic particles having a spherical shape comprises a blend of 10 micron spherical particles and 20 micron spherical particles, and where the blend is from 90:10 to 10:90.

According to another Aspect not of the claimed invention ("Aspect 54") further to any one of Aspects 43 to 52, where the inorganic particles having a spherical shape comprises a blend of 5 micron spherical particles and 10 micron spherical particles, and where the blend is from 10:90 to 90:10.

According to another Aspect not of the claimed invention ("Aspect 55") further to any one of Aspects 43 to 52, the inorganic particles having a spherical shape comprises a blend of 5 micron spherical particles and 20 micron spherical particles, and where the blend is from 10:90 to 90:10.

According to another Aspect not of the claimed invention ("Aspect 56") further to any one of Aspects 43 to 55, including a dynamic binding capacity (DBC) of at least 35 mg/ml at a residence time of 20 seconds.

According to another Aspect not of the claimed invention ("Aspect 57") further to any one of Aspects 43 to 56, where a cycling durability of at least 100 cycles and an operating pressure less than 0.3 MPa.

According to another Aspect not of the claimed invention ("Aspect 58") further to any one of Aspects 43 to 57, where at least one upper intermediate material is positioned on a first side of the stacked membrane assembly and a lower intermediate material is positioned on a second side of the stacked membrane assembly, where the second side opposes the first side.

According to another Aspect not of the claimed invention ("Aspect 59") further to Aspect 58, where the first intermediate material and the second intermediate material are selected from a porous fluoropolymer film, a porous non-fluoropolymer film, a porous non-woven material and a porous woven material.

According to another Aspect not of the claimed invention ("Aspect 60") further to Aspect 59, where at least one of the first intermediate material and the second intermediate material is a polypropylene non-woven material.

In one Aspect not of the claimed invention ("Aspect 61") a manifold includes at least two of the affinity chromatography devices of any one of Aspects 43 to 60 arranged in a parallel configuration.

According to another Aspect not of the claimed invention ("Aspect 62") further to Aspect 61, where the manifold is contained within a housing.

In one Aspect not of the claimed invention ("Aspect 63") a device includes a first manifold and a second manifold in a parallel configuration and where each of the first manifold and the second manifold includes at least two of the affinity chromatography devices of any one of Aspects 43 to 62.

In another Aspect not of the claimed invention ("Aspect 64") further to Aspect 63, where the first manifold and the second manifold are enclosed within a housing.

In one Aspect not of the claimed invention ("Aspect 65") an article includes a diagnostic device that includes a fibrillated polymer membrane positioned between the fluid inlet and fluid outlet and containing therein inorganic particles having a spherical shape and a nominal particle size from about 5 microns to about 20 microns, where a particle size distribution has a D90/D10 less than or equal to 3, and where at least one of the fibrillated polymer membrane and the inorganic particles has covalently bonded thereto a ligand that reversibly binds to a targeted substance within a biological sample.

According to another Aspect not of the claimed invention ("Aspect 66") further to Aspect 65, including a fluid inlet and a fluid outlet fluidly connected to the fluid inlet.

According to another Aspect not of the claimed invention ("Aspect 67") further to Aspect 65 or Aspect 66, including a housing member encompassing the fluid inlet, the fluid outlet and the fibrillated polymer membrane

### BRIEF DESCRIPTION OF THE DRAWINGS

The accompanying drawings are included to provide a further understanding of the disclosure and are incorporated in and constitute a part of this specification, illustrate embodiments, and together with the description serve to explain the principles of the disclosure.
FIG. 1 is an exploded view of a chromatography device containing a wound membrane assembly including a fibrillated heat treated polymer membrane containing therein spherical inorganic polymer particles according to at least one embodiment;
FIG. 2 is a cross section of a chromatography device depicting the outer flow channel and inner flow channel according to at least one embodiment in accordance with at least one embodiment;
FIG. 3 is a schematic cross-section of another spiral wound, normal flow chromatography device in accordance with at least one embodiment;
FIG. 4 is an exploded view of a chromatography device containing a stacked membrane assembly including a fibrillated heat treated polymer membrane containing therein spherical inorganic particles in accordance with at least one embodiment;
FIG. 5 is a graphical illustration depicting the relationship between dynamic binding capacity (DBC) and liquid permeability from the affinity chromatography device described in Example 1 in accordance with at least one embodiment;
FIG. 6 is a graphical illustration depicting the relationship between dynamic binding capacity (DBC) and liquid permeability from the affinity chromatography device described in Example 2 in accordance with at least one embodiment;
FIG. 7 is a schematic illustration of a front view of a manifold containing two chromatography devices arranged in a parallel configuration;
FIG. 8 is a schematic illustration of a top view of the manifold of FIG. 7;
FIG. 9 is a schematic illustration of a perspective view of a manifold containing four chromatography devices arranged in a parallel configuration;
FIG. 10 is a schematic illustration of a top view of the manifold of FIG. 9.
FIG. 11 is a schematic illustration of a front view of two manifolds arranged in a parallel configuration; and
FIG. 12 is a schematic illustration of a top view of the two manifolds of FIG. 11.

### DETAILED DESCRIPTION

Persons skilled in the art will readily appreciate that various aspects of the present disclosure can be realized by any number of methods and apparatus configured to perform the intended functions. It should also be noted that the accompanying figures referred to herein are not necessarily drawn to scale, but may be exaggerated to illustrate various aspects of the present disclosure, and in that regard, the figures should not be construed as limiting. It is to be understood that, as used herein, the term "on" is meant to denote an element, such as a polymer membrane, is directly on another element or intervening elements may also be present. It is to be appreciated that the phrases "spherical particles", "spherical inorganic particles", and "inorganic particles having a spherical shape" may be interchangeably herein. Additionally, the term "spiral wound membrane assembly" is meant to include both the fibrillated heat treated polymer membrane alone and the fibrillated heat treated polymer membrane with the intermediate material. Further, the term "stacked membrane assembly" is meant to include both the fibrillated heat treated polymer membrane alone and the fibrillated heat treated polymer membrane with one or more intermediate material(s). The terms "fibrillated heat treated polymer membrane" and "heat treated fibrillated polymer membrane" may be used interchangeably herein. In addition, the terms "affinity chromatography device" and "chromatography device" may be used interchangeably herein.

The present disclosure is directed to affinity chromatography devices that separate a targeted molecule from an aqueous mixture containing the targeted molecule. The targeted molecule includes, but is not limited to, proteins, antibodies, viral vectors, and combinations thereof. The chromatography device includes a fibrillated heat treated polymer membrane that contains inorganic particles having a spherical shape and a particle size distribution that has a D90/D10 less than or equal to 3. In some embodiments, a blend or combination of various sizes of the spherical inorganic particles is utilized. A nominal particle size of the spherical inorganic particles is from about 5 microns to about 20 microns. An affinity ligand is bonded to the spherical inorganic particles and/or to the fibrillated heat treated polymer membrane. The heat treatment of the polymer membrane results in a significant and beneficial increase to device liquid permeability, subsequently enabling the desired shorter residence times while maintaining acceptable device pressures. The benefit of higher permeability from the heat treatment comes with a proportionately small decrement to device binding capacity (DBC). The chromatography devices have a dynamic binding capacity greater than 35 mg/ml at 10% breakthrough at a residence time of 20 seconds. In addition, the affinity chromatography devices have a cycling durability of at least 100 cycles without exceeding an operating pressure of 0.3 MPa. It is to be appreciated that the term "about" as used herein denotes +/- 10% of the designated unit of measure.

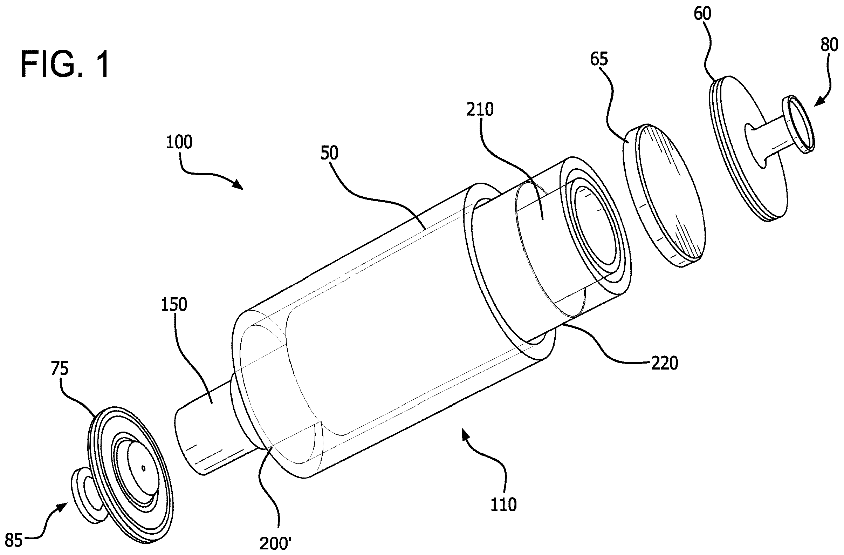

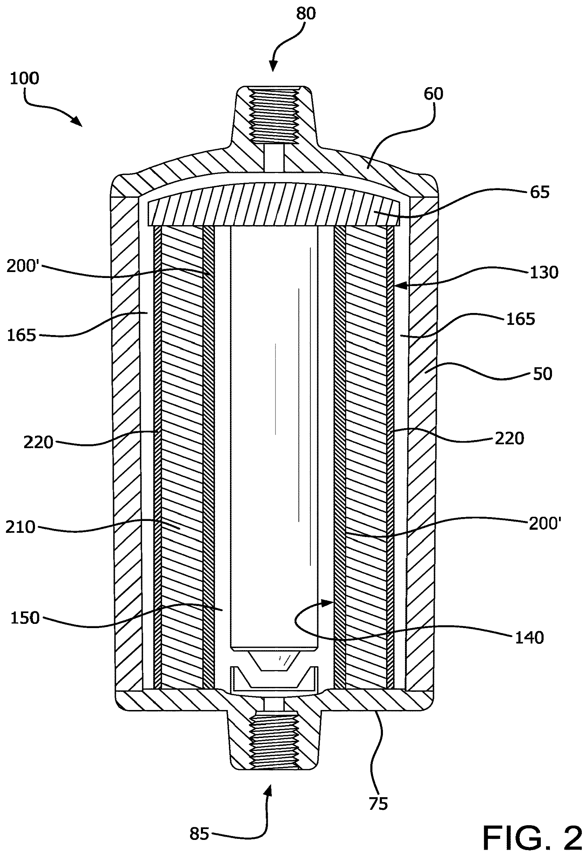

Looking at FIGS. 1 and 2, a wound chromatography device 100 is depicted. In forming the chromatography device 100, at least one fibrillated heat treated polymer membrane containing therein spherical inorganic particles is wrapped around a cylindrical core 150. Fibrillated, as used herein, refers to the inclusion of fibrils in a polymer membrane, such as, for example, a membrane having a microstructure characterized by nodes interconnected by fibrils where voids are the spaces between the nodes and fibrils. "Heat treatment", as used herein, is meant to describe the end product of a heat treating step whereby the fibrillated polymer membrane is subjected to a temperature above its melting point for a designated period of time. In some embodiments, at least one inner intermediate material 200' may be circumferentially positioned against (e.g., wound around) the core 150 to a desired width or a pre-designated amount. A fibrillated heat treated polymer membrane containing spherical inorganic particles therein 210 is then wound around the core 150 over the inner intermediate material 200' to a desired width or a pre-designated amount, and an outer layer of at least one outer intermediate material 220 is circumferentially positioned on (e.g., wound around) the fibrillated heat treated polymer membrane 210 to a desired width or a pre-designated amount. Herein, the combination of the inner intermediate material 200', the fibrillated heat treated polymer membrane 210, and the outer intermediate material 220 will be referred to as the "wound membrane assembly". The "wound membrane assembly", in some embodiments, may include a fibrillated heat treated polymer membrane and an inner intermediate material(s), a fibrillated heat treated polymer membrane and an outer intermediate material(s), as well as any combination of polymers and/or polymer and intermediate material wrapped around a core. The cylindrical core 150 may have a hollow or solid interior. In either instance, the core 150 contains a solid outer wall so that an aqueous mixture flowing through the chromatography device 100 flows within an inner flow channel formed of the inner intermediate material(s), which is discussed in detail below. The use of a hollow core 150 reduces the amount of material used to form the core 150, reduces the weight of the device 100, and reduces manufacturing costs.

The membrane assembly 110 and central core 150 may be positioned within a housing member 50. In some embodiments, the housing member 50 is cylindrical. In the embodiment depicted in FIGS. 1 and 2, the outer intermediate material(s) 220 forms an outer flow channel 130 and the inner intermediate material(s) 200' form an inner flow channel 140. It is to be appreciated that the intermediate material(s) 200', 220 in the embodiments described herein may be different or they may be the same. Additionally, two or more intermediate materials may be used to form one or both of the outer flow channel 130 and the inner flow channel 140. In use, an aqueous mixture flows into the inlet 80 positioned within inlet cap 60 where the mixture flows over the distributor cap 65 and is directed towards the outer flow channel formed by the outer intermediate material(s) 220. The distributor cap 65 directs the aqueous mixture 90 degrees from the feed direction towards the outer flow channel 130 (i.e., intermediate material(s) 220). This redirection promotes a more uniform flow of the aqueous mixture into the outer flow channel 130. The outer intermediate layers forming 220 forming the outer flow channel 130 is located between the housing member 50 and the wound polymer membrane 210. The distributor cap 65 may be a polyolefin or coated with a polyolefin. It is to be appreciated that the aqueous mixture flows along an outer channel gap 165 and connects with the outer flow channel 130.

The aqueous mixture flows through the outer flow channel 130 (i.e., outer intermediate material(s) 220) across the wound polymer membrane 210 in a normal direction (e.g., a normal flow). As the aqueous mixture is passed in a normal flow from the outer flow channel 130 (i.e., outer intermediate material(s) 220) and across the wound polymer membrane 210, the affinity ligand reversibly binds to the targeted protein, thereby effectively removing it from the aqueous mixture. The aqueous mixture then enters the inner flow channel 140 (i.e., inner intermediate material(s) 200') located between the solid outer wall of the central core 150 and the wound polymer membrane 210.

The aqueous mixture then is redirected at the bottom of the inner flow channel 140 by an outlet cap 75. The aqueous mixture then flows out of the chromatography device 100 through outlet 85 located within the outlet cap 75. It is to be appreciated that the diameter and/or height of the central core 150 (and/or the width and/or height of the fibrillated heat treated polymer membrane and/or intermediate material(s)) can be adjusted to achieve a larger volume without negatively impacting performance of the device. Additionally, the targeted protein may be removed from the affinity ligand, for example, by passing a fluid that has a lower pH through the chromatography device, as is known by those of ordinary skill in the art.

The intermediate material(s) 200', 220 is not particularly limiting so long as the aqueous mixture is able to flow therethrough. Some non-limiting examples of suitable intermediate materials include, but are not limited to, a porous fluoropolymer film or a porous non-fluoropolymer film (e.g., a porous polypropylene or other porous polyolefin film), a porous non-woven material, or a porous woven material. In some embodiments, the wound membrane assembly incudes an integrated inlet end cap 60 at one end of the core 150 and an integrated outlet end cap 75 at an opposing end of the core 150 to form an integrated, reusable chromatography device.

The total number of fibrillated polymer membrane layers present in the wound membrane assembly is not particularly limited, and depends on the desired end use and/or desired mass transit flow within the membrane assembly. The wound membrane assembly may include 2, 3, 4, 5, 6, 7, 8, 9, 10, 11, 12, 13, 14, 15, 16, 17, 18, 19, or 20 (or more) total polymer membrane layers. It is to be appreciated that hundreds or even thousands of polymer membrane layers may be present in the stacked membrane assembly. In addition, the fibrillated polymer membrane present in the wound membrane assembly may have a single layer thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated polymer membrane normal to the length area of the fibrillated polymer membrane.

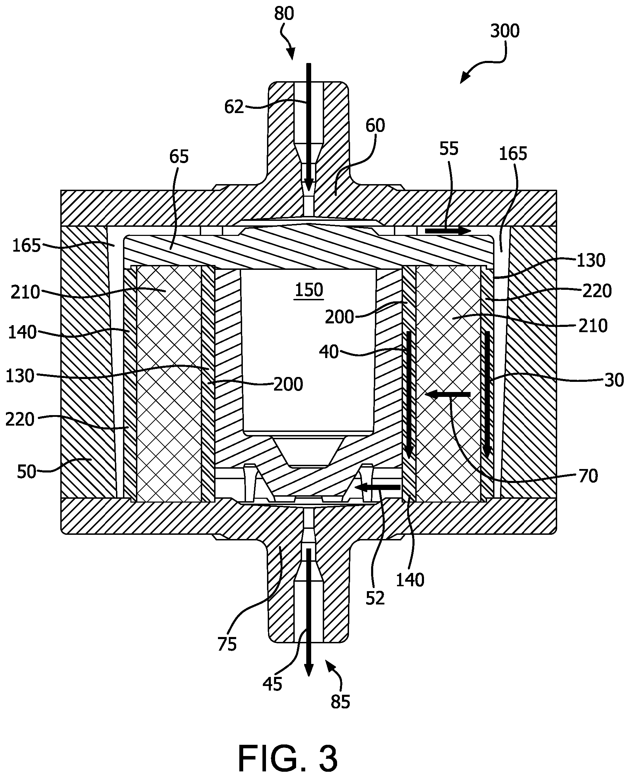

The function of the chromatography device 300 depicted in FIG. 3 is substantially similar to the chromatography device 100 depicted in FIG. 2. For instance, an aqueous mixture is introduced into the chromatography device 300 via the inlet 80 positioned within inlet cap 60 in the direction of arrow 62. The aqueous mixture is directed from the feed direction by the distributor cap 65. For ease of description, the aqueous mixture may flow in the direction depicted by arrow 55 towards the outer flow channel 130 (which may be formed of outer intermediate material(s) 220). The aqueous mixture flows along an outer channel gap 165 and connects with the inner flow channel 140 where it flows in the direction of arrow 30. The aqueous mixture flows across the wound polymer membrane 210 in a normal direction (e.g., a normal flow) as shown by arrow 70 from the outer flow channel 130 to the outer flow channel 140. As the aqueous mixture passes through the wound polymer membrane 210, the affinity ligand reversibly binds to the targeted molecule. It is to be appreciated that the inner flow channel 140 may be formed of inner intermediate material(s) 200'.

The aqueous mixture free of the targeted molecule flows down the outer flow channel 140 in the direction depicted by arrow 40. The aqueous mixture is redirected at the bottom of the inner flow channel 140 the towards the central portion of the chromatography device 300 as depicted by arrow 52. The aqueous mixture free of the targeted molecule flows out of the chromatography device 300 through outlet 85 positioned within the outlet end cap 75 in the direction of arrow 45.

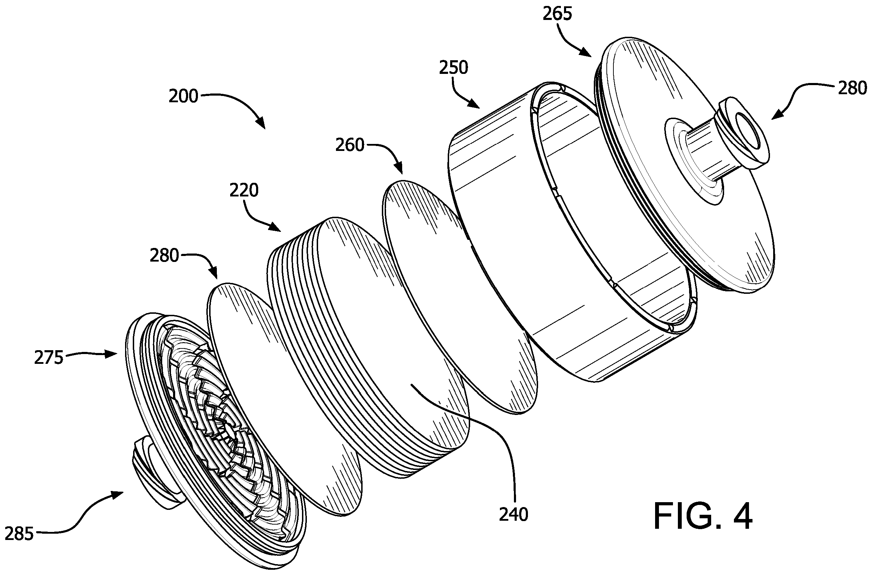

In other embodiments, such as is depicted generally in FIG. 4, the chromatography device 200 contains a fibrillated heat treated polymer membrane configured as individual discs 240 stacked upon each other to form a stacked membrane assembly 220. The fibrillated heat treated polymer membrane 240 may be positioned in a stacked configuration by simply laying the fibrillated heat treated polymer membrane discs 240 on top of each other. Alternatively, the fibrillated heat treated polymer membrane discs 240 may be stacked and subsequently laminated together with heat and/or pressure or other conventional methods. It is to be appreciated that the stacked membrane assembly 240 described herein is with respect to fibrillated heat treated polymer membrane discs for ease of explanation. The fibrillated heat treated polymer membrane formed in their geometric shape(s) and/or non-geometric shape(s) are considered to be within the purview of the disclosure.

The chromatography device 200 includes at least one upper intermediate material(s) 260 positioned at the top of the stacked membrane assembly and at least one lower intermediate material(s) 280 positioned at the bottom of the stacked membrane assembly 220. The upper and lower intermediate material(s) 260, 280, respectively, may be the same or different. Similar to the wound membrane assembly discussed above, the intermediate material(s) 260, 280 used to form the stacked membrane assembly 220 is not particularly limiting so long as the aqueous mixture is able to flow therethrough. Non-limiting examples of suitable intermediate materials include, but are not limited to, a porous fluoropolymer film or a porous non-fluoropolymer film (e.g., a porous polypropylene or other porous polyolefin film), a porous non-woven material, or a porous woven material.

The stacked membrane assembly 220 may be disposed within a housing 250 having an inlet cap 265 and an outlet end cap 275 disposed at opposite ends of the housing 250. In some embodiments, the housing 250 is cylindrical, although any geometry that is capable of housing the stacked membrane assembly and achieving a desired dynamic binding capacity is considered to be within the purview of this disclosure. In some embodiments, the intermediate material(s) 260, 280, the housing 250, the inlet cap 265, and the outlet cap 275 may be formed of a thermoplastic polymer such as polypropylene, polyethylene, or other polyolefins. Alternatively, one or both of the intermediate material(s) 260, 280 may be formed of an inorganic or metallic material, so long as the porous intermediate material(s) 260, 280 do not hinder the operation of the chromatography device.

The fibrillated heat treated polymer membranes 240 in the stacked membrane assembly 220 may be adhered to the housing 250 at the inner walls of the housing 250 via any conventional process (e.g., melt sealing or use of a sealant) that prevents flow between the periphery of the fibrillated heat treated polymer membranes 240 and the housing 250. The inlet cap 265 and the outlet cap 275 may be sealed to the housing 250 by a similar or identical process. The inlet cap and the outlet cap 265, 275 includes an inlet 280 and an outlet 285, respectively, to permit the flow of an aqueous mixture through the affinity chromatography device 200. Specifically, the inlet cap 265 permits fluid flow of the aqueous mixture into the housing 250 and the outlet cap 285 permits fluid flow of the aqueous mixture out of the housing 250. In use, the aqueous mixture flows sequentially through the intermediate material(s) 260, though the fibrillated heat treated polymer membranes 240 forming the stacked membrane assembly 220, and though the intermediate material(s) 280. As the aqueous mixture is passed through the chromatography device 200, the affinity ligand reversibly binds to the targeted molecule, thereby effectively removing it from the aqueous mixture. The targeted molecule may be removed from the affinity ligand, for example, by passing a fluid that has a lower pH through the device, as is known by those of skill in the art.

The total number of fibrillated heat treated polymer membranes present in the stacked membrane assembly is not particularly limited, and depends on the desired end use and/or desired mass transit flow within the membrane assembly. The stacked membrane assembly may include 2, 3, 4, 5, 6, 7, 8, 9, 10, 11, 12, 13, 14, 15, 16, 17, 18, 19, or 20 (or more) total polymer membranes. It is to be appreciated that hundreds or even thousands of polymer membranes may be present in the stacked membrane assembly. In addition, the fibrillated heat treated polymer membranes present in the stacked membrane assembly may have a thickness from about 1 micron to about 10,000 microns, from about 100 microns to about 5,000 microns, from about 500 microns to about 3,000 microns, or from about 650 microns to about 1,000 microns. As used herein, the term "thickness" is the direction of the fibrillated heat treated polymer membrane normal to the length area of the fibrillated heat treated polymer membrane.

The fibrillated heat treated polymer membranes in both the wound membrane assembly and the stacked membrane assembly contain spherical inorganic particles, or particles having a spherical configuration. As used herein, the term "spherical" is meant to denote that the inorganic particle has a round or nearly round shape where the distance from the center of the inorganic particle to the outer edge of the particle at any point is the same or nearly the same distance. In claimed embodiments, the spherical inorganic particles have a particle size distribution that has a D90/D10 less than or equal to 3, less than or equal to 2.5, less than or equal to 2, less than or equal to 1.5, or less than or equal to 1. The spherical inorganic particles have a nominal particle size that is about 5 microns, about 10 microns, about 15 microns, about 20 microns, and combinations and blends thereof. In some embodiments, the spherical inorganic particles are polydisperse.

In some embodiments, the fibrillated heat treated polymer membrane includes more than one nominal particle size and/or more than one type of spherical inorganic particle within the fibrillated heat treated polymer membrane. The fibrillated heat treated polymer membrane may contain from about 10 mass% fibrillated heat treated polymer membrane to about 90 mass% spherical inorganic particles, from about 15 mass% fibrillated heat treated polymer membrane to about 85 mass% spherical inorganic particles, from about 20 mass% fibrillated heat treated polymer membrane to about 80 mass% spherical inorganic particles, from about 30 mass% fibrillated heat treated polymer membrane to about 70 mass% spherical inorganic particles, from about 35 mass% fibrillated heat treated polymer membrane to about 65 mass% spherical inorganic particles, from about 40 mass% fibrillated heat treated polymer membrane to about 60 mass % spherical inorganic particles, from about 45 mass% fibrillated heat treated polymer membrane to about 55 mass% spherical inorganic particles, or from about 50 mass% fibrillated heat treated polymer membrane to about 50 mass% spherical inorganic particles. Non-limiting examples of suitable inorganic particles include silica, zeolites, hydroxyapatite, metal oxides, and combinations thereof. Additionally, the inorganic particles may be either solid or porous. Additionally, the affinity chromatography devices described herein have a hydraulic permeability from about 200 (X 10⁻¹² cm²) to about 700 (X 10⁻¹² cm²), from about 250 (X 10⁻¹² cm²) to about 700 (X 10⁻¹² cm²), from about 300 (X 10⁻¹² cm²) to about 650 (X 10⁻¹² cm²), from about 350 (X 10⁻¹² cm²) to about 600 (X 10⁻¹² cm²), from about 400 (X 10⁻¹² cm²) to about 600 (X 10⁻¹² cm²), from about 400 (X 10⁻¹² cm²) to about 550 (X 10⁻¹² cm²), from about 450 (X 10⁻¹² cm²) to about 550 (X 10⁻¹² cm²), from about 300 (X 10⁻¹² cm²) to about 500 (X 10⁻¹² cm²), from about 350 (X 10⁻¹² cm²) to about 500 (X 10⁻¹² cm²), or from about 400 (X 10⁻¹² cm²) to about 500 (X 10⁻¹² cm²).

In at least one embodiment, the fibrillated heat treated polymer membrane contains a blend of spherical inorganic particles having different nominal particle sizes. For example, the fibrillated heat treated polymer membrane may include a 90:10 mixture of a first nominal particle size (e.g., 5 microns) and a second nominal particle size (e.g., 20 microns) of the same or different spherical inorganic particle. The blend of spherical inorganic particles within the fibrillated heat treated polymer membrane may be any blend, such as, for example, a blend from 10:90 to 90:10, a blend from 30:70 to 70:30, a blend from 60:40 to 40:60, a blend from 25:75 to 75:25, a blend from 20:80 to 80:20, or a 50:50 blend. In one embodiment, the inorganic particles having a spherical shape includes 10 micron spherical particles and 20 micron spherical particles in a blend from 10:90 to 90:10. In another embodiment, the inorganic particles having a spherical shape includes 5 micron spherical particles and 10 micron spherical particles in a blend from 10:90 to 90:10. In a further embodiment, the inorganic particles having a spherical shape includes 5 micron spherical particles and 20 micron spherical particles in a blend from 10:90 to 90:10.

In some embodiments, the affinity ligand is covalently bonded to the spherical inorganic particles. In another embodiments, the affinity ligand is covalently bonded to the fibrillated heat treated polymer membrane. In a further embodiment, the affinity ligand may be bound to both the polymer membrane and the spherical inorganic particle(s). The affinity ligand is a protein, antibody, or polysaccharide that reversibly binds to the targeted molecule. In one embodiment, the affinity ligand is a protein that reversibly binds, for example, to an Fc region of an antibody, an antibody fragment, an Fc fusion protein, or an antibody/drug conjugate. In another embodiment, the affinity ligand is an antibody, Protein L, or a polysaccharide that reversibly binds to a protein or a protein fragment to which it is specific. Exemplary affinity ligands for use in the affinity chromatography device include, but are not limited to, Protein A, Protein G, Protein L, human Fc receptor protein, antibodies that specifically bind to other proteins, and heparin. The affinity ligand may be native, recombinant, or synthetic. In yet another embodiment, the affinity ligand is a metal affinity ligand that reversibly binds to His-Tagged Proteins. In yet another embodiment, the affinity ligand may be an antibody or a polysaccharide that reversibly binds to a viral vector for which it is specific.

In at least one embodiment, the fibrillated heat treated fluoropolymer membrane is an expanded polytetrafluoroethylene (ePTFE) membrane. Expanded polytetrafluoroethylene (ePTFE) membranes prepared in accordance with the methods described in U.S. Patent No. 7,306,729 to Bacino et al.*,* U.S. Patent No. 3,953,566 to Gore, U.S. Patent No. 5,476,589 to Bacino, or U.S. Patent No. 5,183,545 to Branca et al*.* may be used herein. Further, the fibrillated heat treated fluoropolymer membrane may be rendered hydrophilic (e.g., water-wettable) using known methods in the art, such as, but not limited to, the method disclosed in U.S. Patent No. 4,113,912 to Okita, et al. A coating that effectively binds to a ligand, such as described in U.S. Patent No. 5,897,955 to Drumheller, U.S. Patent No. 5,914,182 to Drumheller, or U.S. Patent No. 8,591,932 to Drumheller may be applied to the fibrillated heat treated polymer membrane.

The heat treated fibrillated fluoropolymer membrane may also include a polymer material including a functional tetrafluoroethylene (TFE) copolymer membrane where the functional TFE copolymer material includes a functional copolymer of TFE and PSVE (perfluorosulfonyl vinyl ether), or TFE with another suitable functional monomer, such as, but not limited to, vinylidene fluoride (VDF), vinyl acetate, or vinyl alcohol.

It is to be understood that throughout the application, the term "PTFE" is utilized herein for convenience and is meant to include not only polytetrafluoroethylene, but also expanded PTFE, expanded modified PTFE, and expanded copolymers of PTFE, such as described in U.S. Patent No. 5,708,044 to Branca, U.S. Patent No. 6,541,589 to Baillie, U.S. Patent No. 7,531,611 to Sabol et al., U.S. Patent No. 8,637,144 to Ford, and U.S. Patent No. 9,139,669 to Xu, et al.The intermediate material(s) may be a fluoropolymer film or a non-fluoropolymer film (e.g., polyethylene, expanded polyethylene, or other polyolefin film). Additionally, the intermediate film may be porous. In some embodiments, the intermediate film is a thermoplastic or thermoset polymer film. Advantageously, the chromatography device may be used multiple times. Additionally, the chromatography device may be cleaned with a cleaning solution (e.g. sodium hydroxide, phosphoric acid, citric acid, ethanol, and the like) after each separation process or after multiple separation processes and reused.

The affinity chromatography devices described herein have a dynamic binding capacity (DBC) greater than 35 mg/ml at a residence time of 20 seconds. In addition, the affinity chromatography devices have a cycling durability of at least 100 cycles without exceeding an operating pressure of 0.3 MPa. In addition, the chromatography devices may be used multiple times without losing substantial dynamic binding capacity. Specifically, the chromatography devices may be cleaned with a cleaning solution (e.g. sodium hydroxide) after each separation process and reused. Although embodiments of the wound membrane assembly 110 and stacked membrane assembly 220 are described herein, it is to be appreciated that any number of fibrillated heat treated polymer membranes as well as any and all combinations of types of fibrillated heat treated polymer membranes, types of spherical inorganic particles, sizes of spherical inorganic particles, and orientations of the fibrillated heat treated polymer membrane(s) within the membrane assemblies 110, 220 are within the scope of this disclosure. Also, some or all of the fibrillated heat treated polymer membranes may vary in composition, thickness, permeability, etc. from each other.

The chromatography devices described herein and components thereof can be fabricated using various processes. In some embodiments, injection molding may be used to fabricate the chromatography components provided herein. Other suitable processes can include, but are not limited to, extrusion, compression molding, solvent casting, and combinations thereof. Embodiments employing two fibrillated heat treated polymer membranes that are co-expanded to produce a composite membrane assembly is also considered to be within the purview of the disclosure. Such a composite membrane assembly may contain two (or more) layers of fibrillated heat treated polymer membranes that may be co-extruded or integrated together.

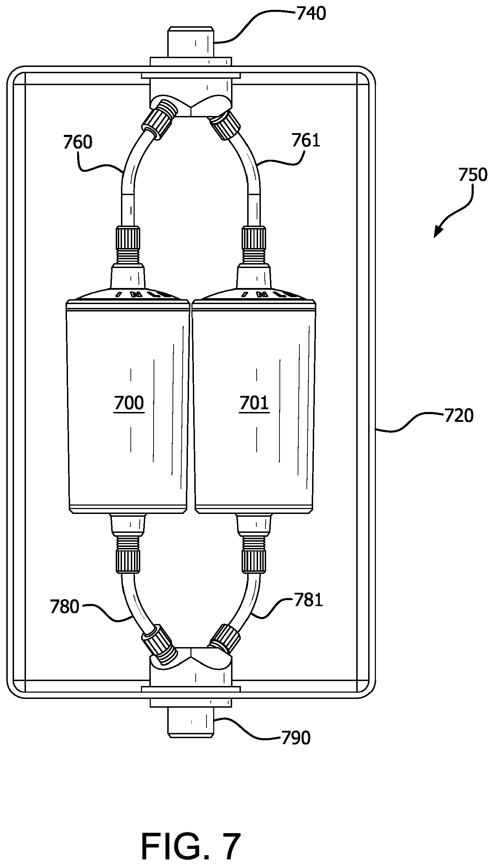

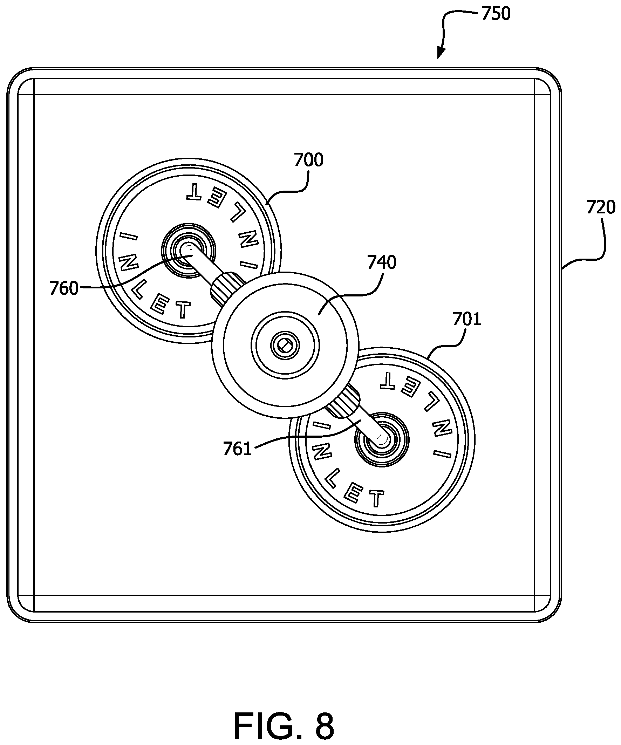

In some embodiments, the affinity chromatography devices described herein utilized in a dual manifold 750 with affinity chromatography devices 700, 701 arranged in a parallel configuration, such as is generally depicted in FIG. 7. It is to be appreciated that the chromatography devices depicted in FIGS. 7-12 contain a stacked membrane assembly, a wound membrane assembly, or a combination of stacked and wound membrane assemblies. As shown, an aqueous mixture flows through a main tube 720 to a distribution element 740. The distribution element 740 is not particularly limiting so long as it divides the flow of the aqueous mixture coming from the main tube 720 into at least two inlet tubes 760, 761. The split aqueous mixture in inlet tubes 760, 761 flows into chromatography devices 700, 701, where the targeted molecule is captured. An aqueous solution (i.e., the aqueous mixture minus the targeted molecule captured by the affinity ligand) flows out of the chromatography devices 700, 701 through outlet tubes 780, 781, respectively. The aqueous solution in outlet tubes 780, 781 are combined in distribution element 790 and reconstituted into a single aqueous solution that flows into tube 795. A top view of the dual manifold 750 containing the parallel affinity chromatography devices 700, 701 is depicted in FIG. 8. In some embodiments, the manifold 750 is positioned within a housing 720.

It is to be appreciated that two chromatography devices 700, 701 are shown in FIGS. 7 and 8 for illustration only and a plurality (i.e. three or more) chromatography devices described herein may be utilized in a manifold in a parallel configuration so long as there is a similar distribution of flow and resistance across the chromatography devices. This similarity across the affinity chromatography devices allows for scalability of device volume and performance. The affinity chromatography devices utilized in the manifold (e.g., dual, quad, etc.) may be the same or different from each other. In addition, the affinity chromatography devices may be dropped into a parallel configuration system without any changes or additions to the manifold 750.

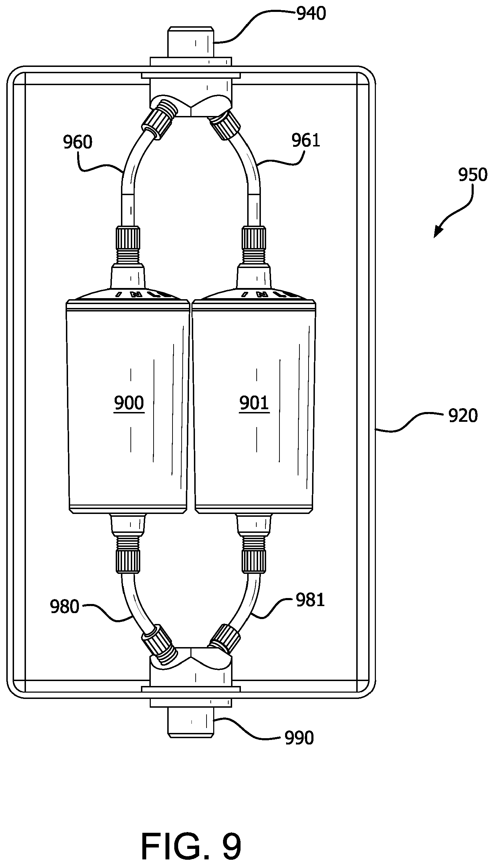

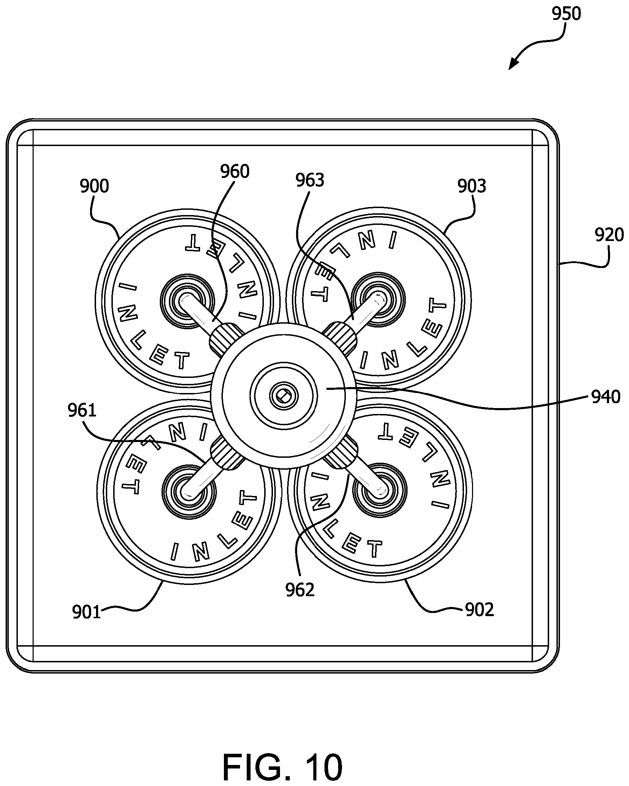

An example of a manifold containing a plurality of chromatography devices as described herein is a quad manifold depicted in FIG. 9. A top view of this quad manifold 950 is shown in FIG. 10. Similar to the dual manifold depicted in FIGS. 7 and 8, an aqueous mixture flows into a distribution element 940. The distribution element 940 divides the flow of an aqueous mixture into inlet tubes 960, 961, 962, and 963. It is to be noted that 962 and 963 are hidden behind 961 and 962, respectively in FIG. 9. Likewise, 903 and 904 are hidden behind 901 and 902, respectively. The split aqueous mixture in inlet tubes 960, 961, 962, and 963 flows into the four chromatography devices 900, 901, 902, 903, respectively, where the targeted molecule is captured. An aqueous solution flows out of each of the chromatography devices 900, 901, 902, and 903 (902 and 903 not illustrated) through outlet tubes 980, 981, 982, and 983, respectively (982 and 983 not illustrated). The aqueous solution in outlet tubes 980, 981 (982 and 983 are hidden behind 980 and 981, respectively and are therefore not illustrated) are combined in a distribution element 990 and reconstituted into a single aqueous solution. In some embodiments, the quad manifold 950 may be positioned within a housing 920.

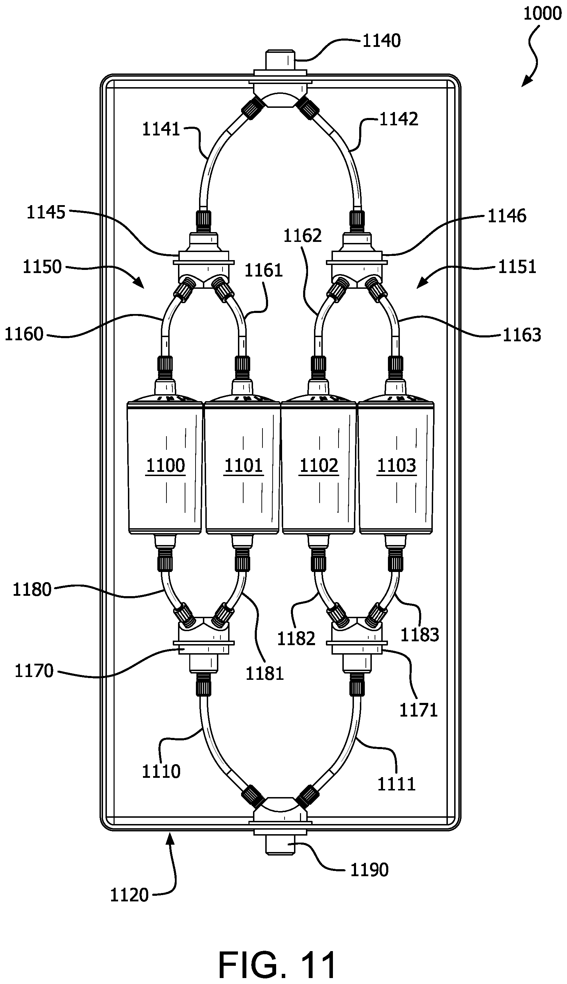

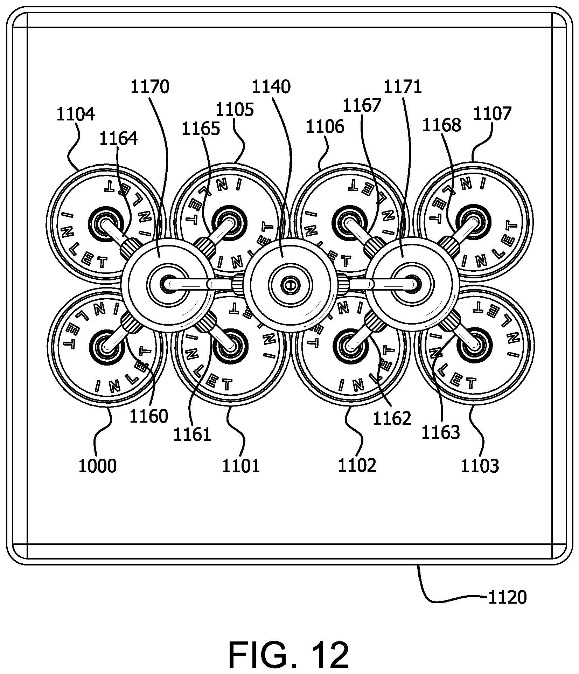

FIG. 11 depicts a device 1000 containing two manifolds 1150,1151 in a parallel configuration. A top view of the device 1000 is depicted in FIG. 12. The manifolds 1150, 1151 each contain four affinity chromatography devices, of which, two affinity chromatography devices 1100, 1101 and 1102, 1103 of each manifold 1150, 1151 is depicted in FIG. 11. The ability to utilize at least two manifolds in parallel advantageously allows for an increase in volume capacity while utilizing the chromatography devices described herein. In other words, the device 1000 eliminates the need to move to a chromatography device that is larger in volume. In addition, placing the manifolds in parallel, such as is depicted in FIG. 11, reduces concerns of over pressurizing the device 1000.

In use, an aqueous mixture flows into a distribution element 1140. The distribution element 1140 divides the flow of an aqueous mixture into two distribution tubes 1141, 1142. The split aqueous mixture in distribution tubes 1141, 1142 is then further divided by distribution elements 1145, 1146 into inlet tubes. In the embodiment depicted in FIG. 11, of the four inlet tubes of manifold 1150, inlet tubes 1160, 1161 are depicted. Similarly, of the four inlet tubes of manifold 1151, inlet tubes 1162, 1163 are depicted. It is to be appreciated that the remaining inlet tubes 1164, 1165, 1166, 1167 are hidden behind inlet tubes 1160, 1161, 1162, 1163 in FIG. 11. The aqueous mixture in the inlet tubes of the first and second manifold 1150, 1151 flow into the affinity chromatography devices. It is to be appreciated that in manifold 1150, affinity chromatography devices 1100, 1101 are depicted and in manifold 1151, affinity chromatography devices 1102, 1103 are depicted. The remaining chromatography devices 1104, 1105, 1106, 1107 are hidden behind affinity chromatography devices 1100, 1101, 1102, 1103 in FIG. 11. The targeted molecule is captured in the affinity chromatography devices.

An aqueous solution flows out of each of the chromatography devices through outlet tubes. In FIG. 11, outlet tubes 1180, 1181 of manifold 1150 and outlet tubes 1182, 1183 of manifold 1151 are depicted. It is to be appreciated that the remaining outlet tubes are hidden behind outlet tubes 1180, 1181, 1182, 1183 in FIG. 11. The aqueous solution in the outlet tubes are combined in distribution element 1170 and distribution element 1171. The combined solution then flows from the distribution elements 1170, 1170 into collection tubes 1110, 1111. The aqueous solution in collection tubes 1110, 1111 are combined in distribution element 1190 and reconstituted into a single aqueous solution. The first manifold 1150 and the second manifold 1151 may be enclosed within a housing 1120.

In some embodiments, the present disclosure is directed to a diagnostic device that removes a targeted substance from a biological sample. The device includes a heat treated fibrillated polymer membrane that contains therein inorganic particles having a spherical shape and a nominal particle size from about 5 microns to about 20 microns. The particle size distribution has a D90/D10 less than or equal to 3 and at least one of the heat treated fibrillated polymer membrane and the inorganic particles has covalently bonded thereto a ligand that reversibly binds to the targeted substance within a biological sample. The device may further include a fluid inlet and a fluid outlet fluidly connected to the fluid inlet. Additionally, the device may include a housing member encompassing the fluid inlet, the fluid outlet and the fibrillated polymer membrane.

Persons skilled in the art will readily appreciate that various aspects of the present disclosure can be realized by any number of methods and apparatus configured to perform the intended functions. It should also be noted that the accompanying figures referred to herein are not necessarily drawn to scale, but may be exaggerated to illustrate various aspects of the present disclosure, and in that regard, the figures should not be construed as limiting.

### TEST METHODS

It should be understood that although certain methods and equipment are described below, other methods or equipment determined suitable by one of ordinary skill in the art may be alternatively utilized.

### Method for determining air permeation of membranes

Membrane air permeation was measured using a Gurley Densometer (Gurley Precision Instruments, Troy, NY). Time to permeate a 100 cc volume of air across a 1" sample diameter was recorded.

### Method for determining particle size and particle size distribution

Particle size and particle size distribution data were supplied by the manufacturer and were measured using the Coulter counter technique.

### Method for determining PTFE melt temperature

Differential Scanning Calorimetry (Model Q2000, TA Instruments, New Castle, DE) was used to characterize PTFE melt temperature within the membrane. Heat flow was measured on 4 mm diameter membrane samples ramping at 10 degrees/min from -40C to 400C in a nitrogen atmosphere. Melt temperature was recorded as the maximum in the associated endothermic peak.

### Method for Determining the Dynamic Binding Capacity at 10% Breakthrough

The chromatography device was inserted in an AKTA^{™} Pure (Cytiva, Marlborough, MA) liquid chromatography system's flow path and a single cycle consisting of the following protocol was performed. Table A sets forth the solutions utilized, Table B sets forth the protocol steps to determine the dynamic binding capacity at 10% breakthrough.

**Table A**

| | |
|---|---|
| | |

| Solution | Description |
|---|---|
| A | 50 mM Sodium Phosphate supplemented with 150 mM Sodium Chloride, pH~7.4 |
| B | 100 mM Citrate, pH~3.4 |
| CIP | 0.1 M NaOH |
| Feed | 2.9-3.0 mg/ml polyclonal IgG (Lee Biosciences) dissolved in Solution A |
| Storage | 20/80 v/v ethanol/water |

**Table B**

| | | | |
|---|---|---|---|
| | | | |

| Step | Solution | Volume of Solution Used (Number of Bed Volumes) | Bed Volume/Volumetric Flow Rate = Seconds Residence Time |
|---|---|---|---|
| 1 | A | 6 | 20 |
| 2 | Feed | Until Absorbance at 280 nm = 10% Breakthrough | 20 |
| 4 | A | 8 | 20 |
| 5 | B | 6 | 20 |
| 6 | A | 6 | 20 |
| 7 | CIP | 15 min contact time at 1 CV/min | N/A |
| 8 | A | 5 | 20 |
| 9 | Storage | 6 | 20 |

### Method for determining liquid permeability

The liquid permeability of the chromatography devices was determined using Darcy's law. Individual devices were characterized for bed cross sectional area and bed length. Solution A was used as the liquid and was characterized for viscosity. The pressure drop across the column as a function of liquid flux was measured on an AKTA^{™} Pure liquid chromatography system.

### EXAMPLES

### Example 1

Spherical silica particles of size and size distribution described in Table C were obtained. The porous particles in Table C were substantially the same with respect to chemical and physical characteristics such as chemical composition, particle shape, nominal particle porosity, nominal particle pore dimensions and nominal particle surface areas.

**Table C**

| | | | |
|---|---|---|---|
| | | | |

| Nominal Porous Silica Particle Size (micron) | Nominal Porous Silica Pore Size (nm) | Measured Average Silica Particle Size (um) | Porous Silica Particle Size Distribution (D90/D10) |
|---|---|---|---|
| 5 | 100 | 3.8 | 1.48 |
| 10 | 100 | 8.2 | 1.29 |
| 20 | 100 | 14.4 | 1.36 |

Porous polytetrafluoroethylene (PTFE) membranes having 15 mass percent PTFE and 85 mass percent porous silica particles of various particle size ratios from Table C were obtained. These ratios are shown in Table D.

**Table D**

| | | | |
|---|---|---|---|
| | | | |

| Porous Membrane | Percent 20 micron nominal particle size | Percent 10 micron nominal particle size | Percent 5 micron nominal particle size |
|---|---|---|---|
| A | 70 | 30 | 0 |
| B | 50 | 50 | 0 |
| C | 30 | 70 | 0 |
| D | 0 | 70 | 30 |

Adjacent sections of the porous membranes described in Table D were affixed to a frame and subjected to a heat treatment process of 370°C for 20 seconds, then removed and cooled to room temperature while still held in the frame. Table E lists the physical characteristics and air permeation values of the polymer membranes before and after the heat treatment process.

**Table E**

| | | | | | | |
|---|---|---|---|---|---|---|
| | | | | | | |

| Porous Membrane | Pre-treatment membrane thickness (mm) | Post-treatment membrane thickness (mm) | Pre-treatment Bulk Density (g/cc) | Post-treatment Bulk Density (g/cc) | Pre-treatment Gurley Permeation (s) | Post-treatment Gurley Permeation (s) |
|---|---|---|---|---|---|---|
| A | 0.661 | 0.694 | 0.466 | 0.457 | 15.7 | 8.7 |
| B | 0.664 | 0.687 | 0.45 | 0.437 | 17.4 | 10 |
| C | 0.647 | 0.687 | 0.442 | 0.437 | 16.9 | 9.2 |
| D | 0.597 | 0.653 | 0.44 | 0.436 | 30.3 | 18.3 |

Porous membranes A and D were characterized for PTFE melt temperature before and after the heat treatment. The results are shown in Table F.

**Table F**

| | | |
|---|---|---|
| | | |

| Porous Membrane | Pre Treatment PTFE Melt Temperature (Degrees Celsius) | Post Treatment PTFE Melt Temperature (Degrees Celsius) |
|---|---|---|
| A | 344.6 | 333.3 |
| D | 344.6 | 333.8 |

The porous membranes from Table E, both pre- and post- heat treatment, were used to manufacture affinity chromatography devices. A polypropylene flow distributor was affixed to one end of a polypropylene cylinder housing. A porous polypropylene intermediate material was placed in the housing. The desired number of PTFE membrane layers were stacked on the polypropylene intermediate material within the housing as shown in Table G. A second porous polypropylene intermediate material was placed on top of the PTFE membrane stack. A second polypropylene flow distributor was affixed to the end of the cylindrical housing opposite the first polypropylene flow distributor. The chromatography device was sealed via a heating process.

The intermediate devices were then treated in a manner to covalently bond Protein A to the stacked membranes. This manner is representative of that typical to those skilled in the art and is further delineated in U.S. Patent No. 10,525,376 to McManaway and in U.S. Patent No. U.S. Patent No. 10,526,367 to McManaway, et al.

The affinity chromatography devices whose manufacture was described above were tested to evaluate their liquid permeability and twenty (20) second residence time dynamic binding capacities using the protocols described in the Test Methods set forth herein. The performance of each of these affinity chromatography devices is shown in Table G.

**Table G**

| | | | | |
|---|---|---|---|---|
| | | | | |

| Device Designation | Porous Membrane Used | Bed Volume (mL) | Device Liquid Permeability (X 10⁻¹² cm²) | Device Dynamic Binding Capacity (mg/mL) at 20 Seconds Residence Time |
|---|---|---|---|---|
| A | 8 layers of membrane A | 0.995 | 331.0 | 41.8 |
| B | 8 layers of heat treated membrane A | 1.006 | 586.3 | 37.3 |
| C | 8 layers of membrane B | 1.003 | 316.0 | 45.9 |
| D | 8 layers of heat treated membrane B | 1.035 | 496.5 | 43.0 |
| E | 8 layers of membrane C | 0.986 | 325.3 | 48.4 |
| F | 8 layers of heat treated membrane C | 1.024 | 485.5 | 45.1 |
| G | 9 layers of membrane D | 1.014 | 215.6 | 55.6 |
| H | 8 layers of heat treated membrane D | 1.000 | 322.4 | 50.6 |

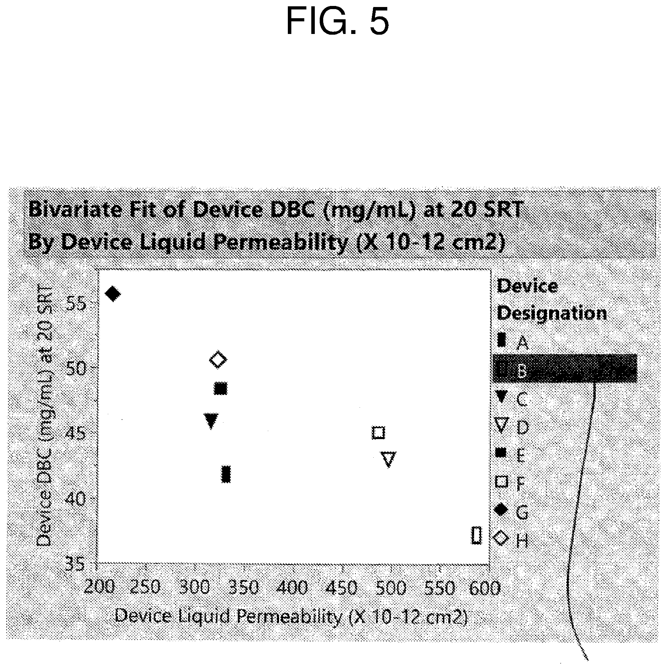

The relative impact of the membrane heat treatment process to the liquid permeability and dynamic binding capacity shown in Table G are represented graphically in FIG. 5.

### Example 2

Porous membranes of Type A from Table E, both pre- and post- heat treatment, were used to manufacture affinity chromatography devices. A polypropylene flow distributor was affixed to one end of a polypropylene cylinder housing. A porous polypropylene intermediate material was placed in the housing. The desired number of PTFE membrane layers were stacked on the polypropylene intermediate material within the housing as shown in Table H. A second porous polypropylene intermediate material was placed on top of the PTFE membrane stack. A second polypropylene flow distributor was affixed to the end of the cylindrical housing opposite the first polypropylene flow distributor. The chromatography device was sealed via a heating process.

As described in Example 1, the intermediate devices were then treated in a manner to covalently bond Protein A to the stacked membranes and then tested to evaluate their liquid permeability and twenty (20) second residence time dynamic binding capacities. The performance of each of these affinity chromatography devices is shown in Table H.

**Table H**

| Device Designation | Porous Membrane Used | Bed Volume (mL) | Device Liquid Permeability (X 10⁻¹² cm²) | Device Dynamic Binding Capacity (mg/mL) at 20 Seconds Residence Time |
|---|---|---|---|---|
| I | 9 layers of membrane A | 2.970 | 408.1 | 39.85 |
| J | 9 layers of membrane A | 2.999 | 399.7 | 39.25 |
| K | 9 layers of heat treated membrane A | 3.033 | 741 | 36.41 |
| L | 9 layers of heat treated membrane A | 3.045 | 787.7 | 37.01 |

Devices I and J were manifolded together in a parallel configuration into Device M such as is depicted in FIGS. 7 and 8. Devices K and L were similarly manifolded in a parallel configuration into Device N.

The affinity chromatography devices M and N, whose manufacture was described above, were tested to evaluate their liquid permeability and twenty (20) second residence time dynamic binding capacities using the protocols described in the Test Methods set forth herein. The performance of each of these affinity chromatography devices is shown in Table I.

**Table I**

| Manifolded Device Designation | Devices used | Manifolded Bed Volume (mL) | Device Liquid Permeability (X 10⁻¹² cm²) | Device Dynamic Binding Capacity (mg/mL) at 20 Seconds Residence Time |
|---|---|---|---|---|
| M | I, J | 5.969 | 410.1 | 39.54 |
| N | K, L | 6.078 | 742.4 | 36.52 |

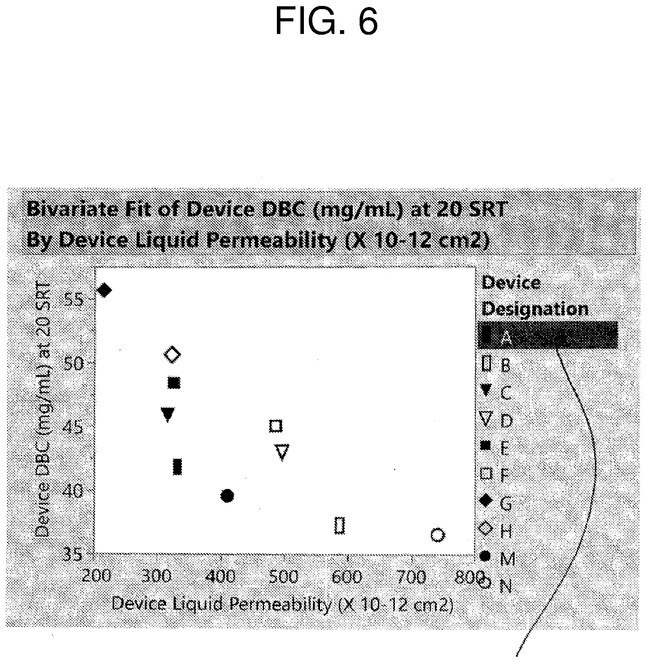

The relative impact of the membrane heat treatment process to the liquid permeability and dynamic binding capacity shown in Table H are represented graphically in FIG. 6 and can be compared to the data set forth in FIG. 5.

The invention of this application has been described above both generically and with regard to specific embodiments. It will be apparent to those skilled in the art that various modifications and variations can be made in the embodiments without departing from the scope of the disclosure. Thus, it is intended that the embodiments cover the modifications and variations of this invention provided they come within the scope of the appended claims.

## Claims

1. An article comprising:
an affinity chromatography device (100, 200, 300) including:
a fluid inlet (80);
a fluid outlet (85) fluidly connected to the fluid inlet;
a fibrillated heat treated polymer membrane (210) positioned between the fluid inlet (80) and fluid outlet (85) and containing therein inorganic particles having a spherical shape and a nominal particle size selected from 5 microns, 10 microns, 15 microns, 20 microns, and combinations thereof;
a housing (50) encompassing the fluid inlet (80), the fluid outlet (85) and the fibrillated heat treated polymer membrane (210),
wherein a particle size distribution has a D90/D10 less than or equal to 3,
wherein at least one of the fibrillated heat treated polymer membrane and the inorganic particles has covalently bonded thereto an affinity ligand that reversibly binds to a protein, antibody, viral vector and combinations thereof,
wherein the affinity chromatography device (100, 200, 300) has a hydraulic permeability from 200 (X 10⁻¹² cm²) to 700 (X 10⁻¹² cm²),
wherein the affinity chromatography device (100, 200, 300) has a dynamic binding capacity (DBC) of at least 35 mg/ml at 10% breakthrough at a residence time of 20 seconds, and
wherein said fibrillated heat treated polymer membrane (210) is obtained by subjecting the fibrillated polymer containing the inorganic particles therein to a temperature above the melting point of the fibrillated polymer membrane for a designated period of time.

2. The article of claim 1, wherein the inorganic particles having a spherical shape are selected from silica, zeolites, hydroxyapatite, metal oxides and combinations thereof.

3. The article of claim 1, wherein the fibrillated heat treated polymer membrane (210) comprises an expanded polytetrafluoroethylene membrane, an expanded modified polytetrafluoroethylene membrane, an expanded tetrafluoroethylene copolymer membrane, or an expanded polyethylene membrane.

4. The article of claim 1, wherein the fibrillated polymer membrane (210) is an expanded polytetrafluoroethylene membrane.

5. The article of claim 1, wherein the affinity ligand is selected from Protein A, Protein G, Protein L, human Fc receptor protein, antibodies, polysaccharides and combinations thereof.

6. The article of claim 1, wherein the inorganic particles comprise at least a first inorganic particle having a spherical shape and a first nominal particle size and a second inorganic particle having a spherical shape and a second nominal particle size, the first and second nominal particle sizes being different from each other.

7. The article of claim 1, wherein the inorganic particles having a spherical shape comprise a blend of 10 micron spherical particles and 20 micron spherical particles, and wherein the blend is from 10:90 to 90:10.

8. The article of claim 1, wherein the inorganic particles having a spherical shape comprise a blend of 5 micron spherical particles and 10 micron spherical particles, and wherein the blend is from 10:90 to 90:10.

9. The article of claim 1, wherein the inorganic particles having a spherical shape comprise a blend of 5 micron spherical particles and 20 micron spherical particles, and wherein the blend is from 10:90 to 90:10.

10. The article of any one of claims 1 to 9, wherein the affinity chromatography device (100, 200, 300) has a cycling durability of at least 100 cycles at an operating pressure less than 0.3 MPa.

11. The article of claim 1, wherein the fibrillated heat treated polymer membrane has a wound configuration.

12. The article of claim 1, wherein the fibrillated heat treated polymer membrane has a stacked configuration.

13. The article of claim 1, wherein an inner intermediate material (200') is circumferentially positioned on an outer surface of a centrally located core (150) and wherein the fibrillated heat treated polymer membrane (210) is circumferentially positioned on the inner intermediate material (200').

14. The article of claim 13, comprising an outer intermediate material (220) circumferentially positioned on the heat treated fibrillated polymer membrane (210).

15. The article of claim 14, wherein the inner intermediate material (210') and the outer intermediate material (220) are selected from a porous fluoropolymer film, a porous non-fluoropolymer film, a porous non-woven material and a porous woven material.

16. The article of claim 1, wherein the fibrillated heat treated polymer membrane (210) comprises a blend of the spherical inorganic particles having different nominal particle sizes from 10:90 to 90: 10, from 30:70 to 70:30, from 60:40 to 40:60, from 25:75 to 75:25, from 20:80 to 80:20, or from 50:50.

17. Use of the article of any one of claims 1 to 16 to separate the targeted molecule from a fluid stream.

18. A device (1000) comprising a first manifold (1150) and a second manifold (1151) in a parallel configuration, wherein each of the first manifold (1150) and the second manifold (1151) includes at least two of the articles of any one of claims 1 to 16.

19. The device of claim 18, wherein the first manifold and the second manifold are enclosed within a housing.

20. A manifold (750) comprising at least two of the articles (700, 701) of any one of claims 1 to 16 arranged in a parallel configuration.

21. The manifold (750) of claim 20, wherein the manifold (750) is contained within a housing (720).

## Patentansprüche

1. Artikel, umfassend:
eine Affinitätschromatographievorrichtung (100, 200, 300), beinhaltend:
einen Fluideinlass (80),
einen Fluidauslass (85), der fluidisch mit dem Fluideinlass verbunden ist;
eine fibrillierte wärmebehandelte Polymermembran (210), die zwischen dem Fluideinlass (80) und dem Fluidauslass (85) positioniert ist und darin anorganische Partikel mit einer kugelförmigen Form und einer nominalen Partikelgröße ausgewählt aus 5 Mikrometern, 10 Mikrometern, 15 Mikrometern, 20 Mikrometern und Kombinationen davon enthält;
ein Gehäuse (50), das den Fluideinlass (80), den Fluidauslass (85) und die fibrillierte wärmebehandelte Polymermembran (210) umschließt,
wobei eine Partikelgrößenverteilung eine D90/D10 von weniger als oder gleich 3 aufweist,
wobei zumindest eines von der fibrillierten wärmebehandelten Polymermembran und den anorganischen Partikeln einen Affinitätsliganden kovalent daran gebunden aufweist, der reversibel an ein Protein, einen Antikörper, einen viralen Vektor und Kombination davon bindet,
wobei die Affinitätschromatographievorrichtung (100, 200, 300) eine hydraulische Permeabilität von 200 (X 10⁻¹² cm²) bis 700 (X 10⁻¹² cm²) aufweist,
wobei die Affinitätschromatographievorrichtung (100, 200, 300) eine dynamische Bindungskapazität (DBC) von zumindest 35 mg/ml bei 10 % Durchbruch bei einer Verweilzeit von 20 Sekunden aufweist und
wobei die fibrillierte wärmebehandelte Polymermembran (210) erlangt wird, indem das fibrillierte Polymer, das die anorganischen Partikel darin enthält, einer Temperatur über dem Schmelzpunkt der fibrillierten Polymermembran für einen vorgegebenen Zeitraum ausgesetzt wird.

2. Artikel nach Anspruch 1, wobei die anorganischen Partikel mit einer kugelförmigen Form aus Siliciumdioxid, Zeolithen, Hydroxyapatit, Metalloxiden und Kombinationen davon ausgewählt sind.

3. Artikel nach Anspruch 1, wobei die fibrillierte wärmebehandelte Polymermembran (210) eine expandierte Polytetrafluorethylenmembran, eine expandierte modifizierte Polytetrafluorethylenmembran, eine expandierte Tetrafluorethylencopolymermembran oder eine expandierte Polyethylenmembran umfasst.

4. Artikel nach Anspruch 1, wobei die fibrillierte Polymermembran (210) eine expandierte Polytetrafluorethylenmembran ist.

5. Artikel nach Anspruch 1, wobei der Affinitätsligand aus Protein A, Protein G, Protein L, menschlichem Fc-Rezeptor-Protein, Antikörpern, Polysacchariden und Kombinationen davon ausgewählt ist.

6. Artikel nach Anspruch 1, wobei die anorganischen Partikel zumindest ein erstes anorganisches Partikel mit einer kugelförmigen Form und einer ersten nominalen Partikelgröße und ein zweites anorganisches Partikel mit einer kugelförmigen Form und einer zweiten nominalen Partikelgröße umfassen, wobei sich die erste und die zweite nominale Partikelgröße voneinander unterscheiden.

7. Artikel nach Anspruch 1, wobei die anorganischen Partikel mit einer kugelförmigen Form eine Mischung aus kugelförmigen 10-Mikrometer-Partikeln und kugelförmigen 20-Mikrometer-Partikeln umfassen und wobei die Mischung von 10:90 bis 90:10 ist.

8. Artikel nach Anspruch 1, wobei die anorganischen Partikel mit einer kugelförmigen Form eine Mischung aus kugelförmigen 5-Mikrometer-Partikeln und kugelförmigen 10-Mikrometer-Partikeln umfassen und wobei die Mischung von 10:90 bis 90:10 ist.

9. Artikel nach Anspruch 1, wobei die anorganischen Partikel mit einer kugelförmigen Form eine Mischung aus kugelförmigen 5-Mikrometer-Partikeln und kugelförmigen 20-Mikrometer-Partikeln umfassen und wobei die Mischung von 10:90 bis 90:10 ist.

10. Artikel nach einem der Ansprüche 1 bis 9, wobei die Affinitätschromatographievorrichtung (100, 200, 300) eine Zyklenbeständigkeit von zumindest 100 Zyklen bei einem Betriebsdruck von weniger als 0,3 MPa aufweist.

11. Artikel nach Anspruch 1, wobei die fibrillierte wärmebehandelte Polymermembran eine gewickelte Konfiguration aufweist.

12. Artikel nach Anspruch 1, wobei die fibrillierte wärmebehandelte Polymermembran eine gestapelte Konfiguration aufweist.

13. Artikel nach Anspruch 1, wobei ein inneres Zwischenmaterial (200') umlaufend auf einer äußeren Oberfläche eines sich zentral befindenden Kerns (150) positioniert ist und wobei die fibrillierte wärmebehandelte Polymermembran (210) umlaufend auf dem inneren Zwischenmaterial (200') positioniert ist.

14. Artikel nach Anspruch 13, umfassend ein äußeres Zwischenmaterial (220), das umlaufend auf der wärmebehandelten fibrillierten Polymermembran (210) positioniert ist.

15. Artikel nach Anspruch 14, wobei das innere Zwischenmaterial (210') und das äußere Zwischenmaterial (220) aus einem porösen Fluorpolymerfilm, einem porösen Nicht-Fluorpolymerfilm, einem porösen Vliesmaterial und einem porösen Gewebematerial ausgewählt sind.

16. Artikel nach Anspruch 1, wobei die fibrillierte wärmebehandelte Polymermembran (210) eine Mischung aus den kugelförmigen anorganischen Partikeln mit unterschiedlichen nominalen Partikelgrößen von 10:90 bis 90:10, von 30:70 bis 70:30, von 60:40 bis 40:60, von 25:75 bis 75:25, von 20:80 bis 80:20 oder von 50:50 umfasst.

17. Verwendung des Artikels nach einem der Ansprüche 1 bis 16, um das targetierte Molekül von einem Fluidstrom zu trennen.

18. Vorrichtung (1000), umfassend einen ersten Verteiler (1150) und einen zweiten Verteiler (1151) in einer parallelen Konfiguration, wobei jeder des ersten Verteilers (1150) und des zweiten Verteilers (1151) zumindest zwei der Artikel nach einem der Ansprüche 1 bis 16 beinhaltet.

19. Vorrichtung nach Anspruch 18, wobei der erste Verteiler und der zweite Verteiler innerhalb eines Gehäuses eingeschlossen sind.

20. Verteiler (750), umfassend zumindest zwei der Artikel (700, 701) nach einem der Ansprüche 1 bis 16, die in einer parallelen Konfiguration angeordnet sind.

21. Verteiler (750) nach Anspruch 20, wobei der Verteiler (750) innerhalb eines Gehäuses (720) enthalten ist.

## Revendications

1. Article comprenant :
un dispositif de chromatographie d'affinité (100, 200, 300) comprenant :
une admission de fluide (80) ;
une évacuation de fluide (85) reliée fluidiquement à l'admission de fluide ;
une membrane polymère fibrillée traitée thermiquement (210) positionnée entre l'admission de fluide (80) et l'évacuation de fluide (85) et contenant dans celle-ci des particules inorganiques présentant une forme sphérique et une taille de particule nominale sélectionnée parmi 5 microns, 10 microns, 15 microns, 20 microns, et leurs combinaisons ;
un boîtier (50) enfermant l'admission de fluide (80), l'évacuation de fluide (85) et la membrane polymère fibrillée traitée thermiquement (210), dans lequel une distribution de taille de particule présente un D90/D10 inférieur ou égal à 3, dans lequel au moins l'une de la membrane polymère fibrillée traitée thermiquement et des particules inorganiques comporte, lié de manière covalente à celle-ci, un ligand d'affinité qui se lie de manière réversible à une protéine, un anticorps, un vecteur viral et leurs combinaisons, dans lequel le dispositif de chromatographie d'affinité (100, 200, 300) présente une perméabilité hydraulique de 200 (X 10⁻¹² cm²) à 700 (X 10⁻¹² cm²), dans lequel le dispositif de chromatographie d'affinité (100, 200, 300) présente une capacité de liaison dynamique (DBC) d'au moins 35 mg/ml à 10 % de percée pour un temps de séjour de 20 secondes, et
dans lequel ladite membrane polymère fibrillée traitée thermiquement (210) est obtenue en soumettant le polymère fibrillé contenant les particules inorganiques à une température supérieure au point de fusion de la membrane polymère fibrillée pendant une période de temps désignée.

2. Article selon la revendication 1, dans lequel les particules inorganiques ayant une forme sphérique sont choisies parmi la silice, les zéolites, l'hydroxyapatite, les oxydes métalliques et leurs combinaisons.

3. Article selon la revendication 1, dans lequel la membrane polymère fibrillée traitée thermiquement (210) comprend une membrane en polytétrafluoroéthylène expansé, une membrane en polytétrafluoroéthylène modifié expansé, une membrane en copolymère de tétrafluoroéthylène expansé ou une membrane en polyéthylène expansé.

4. Article selon la revendication 1, dans lequel la membrane polymère fibrillée (210) est une membrane de polytétrafluoroéthylène expansé.

5. Article selon la revendication 1, dans lequel le ligand d'affinité est choisi parmi la protéine A, la protéine G, la protéine L, la protéine du récepteur Fc humain, les anticorps, les polysaccharides et leurs combinaisons.

6. Article selon la revendication 1, dans lequel les particules inorganiques comprennent au moins une première particule inorganique ayant une forme sphérique et une première taille de particule nominale et une seconde particule inorganique ayant une forme sphérique et une seconde taille de particule nominale, les première et seconde tailles de particule nominale étant différentes l'une de l'autre.

7. Article selon la revendication 1, dans lequel les particules inorganiques ayant une forme sphérique comprennent un mélange de particules sphériques de 10 microns et de particules sphériques de 20 microns, et dans lequel le mélange est de 10:90 à 90:10.

8. Article selon la revendication 1, dans lequel les particules inorganiques ayant une forme sphérique comprennent un mélange de particules sphériques de 5 microns et de particules sphériques de 10 microns, et dans lequel le mélange est de 10:90 à 90:10.

9. Article selon la revendication 1, dans lequel les particules inorganiques ayant une forme sphérique comprennent un mélange de particules sphériques de 5 microns et de particules sphériques de 20 microns, et dans lequel le mélange est de 10:90 à 90:10.

10. Article selon l'une quelconque des revendications 1 à 9, dans lequel le dispositif de chromatographie d'affinité (100, 200, 300) présente une durabilité de cycle d'au moins 100 cycles à une pression de fonctionnement inférieure à 0,3 MPa.

11. Article selon la revendication 1, dans lequel la membrane polymère fibrillée traitée thermiquement présente une configuration enroulée.

12. Article selon la revendication 1, dans lequel la membrane polymère fibrillée traitée thermiquement présente une configuration empilée.

13. Article selon la revendication 1, dans lequel un matériau intermédiaire interne (200') est positionné de manière circonférentielle sur une surface externe d'un noyau central (150) et dans lequel la membrane polymère fibrillée traitée thermiquement (210) est positionnée de manière circonférentielle sur le matériau intermédiaire interne (200').

14. Article selon la revendication 13, comprenant un matériau intermédiaire externe (220) positionné de manière circonférentielle sur la membrane polymère fibrillée traitée thermiquement (210).

15. Article selon la revendication 14, dans lequel le matériau intermédiaire interne (210') et le matériau intermédiaire externe (220) sont choisis parmi un film fluoropolymère poreux, un film fluoropolymère non poreux, un matériau non tissé poreux et un matériau tissé poreux.

16. Article selon la revendication 1, dans lequel la membrane polymère fibrillée traitée thermiquement (210) comprend un mélange des particules inorganiques sphériques ayant différentes tailles de particules nominales de 10:90 à 90:10, de 30:70 à 70:30, de 60:40 à 40:60, de 25:75 à 75:25, de 20:80 à 80:20 ou de 50:50.

17. Utilisation de l'article selon l'une quelconque des revendications 1 à 16 pour séparer la molécule ciblée d'un flux de fluide.

18. Dispositif (1000) comprenant un premier collecteur (1150) et un second collecteur (1151) dans une configuration parallèle, dans lequel chacun du premier collecteur (1150) et du second collecteur (1151) comprend au moins deux des articles selon l'une quelconque des revendications 1 à 16.

19. Dispositif selon la revendication 18, dans lequel le premier collecteur et le second collecteur sont enfermés à l'intérieur d'un boîtier.

20. Collecteur (750) comprenant au moins deux des articles (700, 701) selon l'une quelconque des revendications 1 à 16 agencés dans une configuration parallèle.

21. Collecteur (750) selon la revendication 20, dans lequel le collecteur (750) est contenu à l'intérieur d'un boîtier (720).
